(19)

Europäisches
Patentamt
European
Patent Office
Office européen
des brevets

(11)  **EP 2 219 403 A1**

(12)  **EUROPEAN PATENT APPLICATION**

(43) Date of publication:
**18.08.2010  Bulletin 2010/33**

(51) Int Cl.:
***H04W 28/06*** (2009.01)

(21) Application number: **09305125.8**

(22) Date of filing: **12.02.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(71) Applicant: **Thomson Licensing**
**92130 Issy-les-Moulineaux (FR)**

(72) Inventors:
• **Salondis, Theodoros**
  **75013, PARIS (FR)**

• **Lundgren, Henrik**
  **92350, Le Plessis Robinson (FR)**
• **Koutsonikolas, Dimitros**
  **WEST LAFAYETTE, IN IN 47906 (US)**

(74) Representative: **Ruellan-Lemonnier, Brigitte**
**Technicolor**
**1-5 rue Jeanne d'Arc**
**92130 Issy-les-Moulineaux (FR)**

(54) **Device and method for computing chosen protocol parameters of a time slotted mac protocol used in a wireless network**

(57)     A method is intended for computing chosen protocol parameters for a time slotted MAC protocol intended for a given application in a wireless network (N) having a given hardware platform and a given topology adapted to transmission of frames consisting in a synchronization and control sub-frame, hereafter named SCS frame and at least partly generated by a synchronization algorithm, and a sequence of data sub-frames, hereafter named DS frames, and divided into multiple time slots. This method consists in determining chosen protocol parameters by minimizing the overhead of the time slotted MAC protocol, subject to a set of chosen requirements of at least the given application, to chosen platform constraints, depending on chosen delays introduced by the hardware platform and impacting the time slotted MAC protocol, and to chosen SCS frame constraints, depending on chosen parameters of the synchronization algorithm.

FIG.1

EP 2 219 403 A1

**Description**

Technical field

The present invention relates to wireless networks, and more precisely to wireless networks using Medium Access Control (MAC) protocols.

Background of the invention

As it is known by the man skilled in the art, a MAC protocol operates at layer 2 of the OSI model, and provides functions, such as addressing and channel access control, allowing to interface the physical layer and the networking layer. For instance, transmissions occur after the MAC protocol has granted channel access.

The invention concerns more particularly the so-called time slotted MAC protocols that are used in some existing and emerging wireless networks, such as cellular (or mobile) radio networks (TDMA and GSM, for instance) and data communication networks (IEEE 802.15 (i.e. WPAN (Wireless Personal Area Network), such as Bluetooth or Zigbee)), IEEE 802.16 (i.e. WMAN (Wireless Metropolitan Area Network), such as WiMAX)), IEEE 802.11 (i.e. WLAN (Wireless Local Area Network)), or ECMA UWB (Ultra Wide Band), for instance). In these wireless networks all nodes are synchronized on a time slot basis and time is divided in periodic multi-slot frames, each consisting in a synchronization and control sub-frame (or SCS frame) and a sequence of data sub-frames (or DS frames) divided into multiple time slots. The DS frames includes data to be transmitted, and the SCS frame includes management functions such as synchronization, interference estimation, and schedule computation and dissemination, if a reservation-based access is used. The slots of SCS and DS frames can be shared in a contention-based manner or reservation-based manner.

Industry standards provide ranges for time slotted MAC protocol parameters. Some of them also provide general guidelines on how these parameters can be measured. However, these Industry standards do not provide a systematic way to determine the time slotted MAC protocol parameters that would ensure correct and optimal protocol operation for a given network environment and a given application. So, this parameter determination is left to the party which is in charge of implementing the MAC protocol for a given application.

This parameter determination becomes still more challenging when it concerns a new proprietary time slotted MAC protocol that must be defined for at least one new specific application or at least one new (or future) industry standard. Indeed in this case, there are no requirements or guidelines imposed by the industry standard, and therefore the constraints are imposed by the hardware platform, the physical (PHY) layer that is used to implement the new time slotted MAC protocol and the network environment where the new application is deployed.

A lot of MAC scheduling algorithms have been proposed for some time slotted wireless networks. They focus on transmission scheduling. Some of these MAC scheduling algorithms also allow to optimize performance for a given network environment and/or a given application. However, they are assumed to operate on top of an already designed MAC protocol, which means that MAC scheduling and MAC design are orthogonal. It is recalled that MAC scheduling refers to the dynamic protocol operation at fast time scale which has to be performed to address interference and wireless channel fluctuations given a designed MAC protocol, and MAC design aims at determining optimal MAC parameters for a specific application and/or specific network environment, that are either initially fixed or change at a large time scale.

An example of method for computing the capacity of WiMAX single-hop wireless networks based on application requirements and MAC parameters provided by the WiMAX standard is described in the document "WiMAX Capacity White paper" which can be notably found at the Internet address "http://www.srtelecom.com/en/index.html".

Unfortunately no general method allows to design wireless time-slotted networks in a systematic manner while taking into account the specific hardware platforms that are used for deploying such wireless time-slotted networks.

Summary of the invention

The object of this invention is to allow an optimal design of a time slotted MAC protocol with tuned parameters intended for allowing an efficient and correct operation of a single-hop or multi-hop wireless network (defined by an existing or future industry standard).

For this purpose, the invention provides a method to compute chosen protocol parameters for a time slotted MAC protocol intended for a given application in a wireless network having a given hardware platform and a given topology adapted to transmission of frames consisting in a synchronization and control sub-frame, hereafter named SCS frame and at least partly generated by a synchronization algorithm, and a sequence of data sub-frames, hereafter named DS frames, and divided into multiple time slots.

This method consists of determining chosen protocol parameters by minimizing the overhead of the time slotted MAC protocol, subject to a set of chosen requirements of at least the given application, to chosen platform constraints, depending on chosen delays introduced by the hardware platform and impacting the time slotted MAC protocol, and to chosen SCS frame constraints, depending on chosen parameters of the synchronization algorithm.

The method according to the invention may include additional characteristics considered separately or combined, and notably:

- the protocol parameters may be chosen from a protocol parameter group comprising at least a DS frame slot duration (S), a DS frame slot packet duration (D), a slot guard time ($T_G$), a DS frame duration ($T_F$), a SCS frame duration ($T_{SCS}$), a SCS frame slot duration ($D_{SCS}$), and a synchronization period ($T_{synch}$);

- the set of requirements may be chosen from a requirement group comprising at least a SCS frame delay requirement $\left(T_{SCS}^{\max}\right)$, a DS frame delay requirement $\left(T_F^{\max}\right)$, a synchronization algorithm reliability ($\varepsilon$), minimum and maximum requirements for a DS frame slot packet duration (D), and minimum and maximum requirements for a SCS frame slot duration ($D_{SCS}$);

- the hardware platform delays (impacting the time slotted MAC protocol) may be chosen from a delay group comprising at least a clock drift rate (rd), a packet preparation overhead ($T_{Dpp}$), a slot processing overhead ($T_P$), a communication turnaround time between two successive frame receptions (T_RxRx), a communication turnaround time between two successive frame transmissions (T_TxTx), a communication turnaround time between a frame reception and a frame transmission (T_RxTx), and a communication turnaround time between a frame transmission and a frame reception (T_TxRx). These delays may be measured or given by specifications or requirements;

- the hardware platform constraints may be chosen to ensure correct and efficient protocol operations for transmissions during both a SCS frame and a DS frame;

- the SCS frame constraints may be chosen to ensure correct and efficient operation of the synchronization algorithm during a SCS frame;

  ➢ the SCS frame constraints may be chosen in order to determine a synchronization period ($T_{synch}$) and a SCS frame duration ($T_{SCS}$) as a function of a slot guard time ($T_G$), a clock drift rate (rd) and synchronization failures due to packet losses;

- it may comprise the steps of:

  i) performing measurements on the hardware platform to determine at least some of the chosen delays ($T_P$, $T_{Dpp}$, $rd_{max}$),
  ii) determining some of the chosen protocol parameters ($T_G$, $T_{synch}$, D, $D_{SCS}$) that minimize the time slotted MAC protocol overhead, subject to the set of chosen requirements, the chosen platform constraints and the chosen SCS frame constraints, and
  iii) computing the remaining chosen protocol parameters ($T_{SCS}$, S, $T_F$) from the chosen protocol parameters ($T_G$, $T_{synch}$, D, $D_{SCS}$) determined in step ii);

  ➢ in step i) one may determine a maximal clock drift rate ($rd_{max}$), a packet preparation overhead ($T_{Dpp}$) and a slot processing overhead ($T_P$) through measurements;
  ➢ in step ii) one may determine a DS frame slot packet duration (D), a slot guard time ($T_G$), a SCS frame slot duration ($D_{SCS}$) and a synchronization period ($T_{synch}$);

  • in step ii) one may minimize $\dfrac{P\left(T_P + D_{SCS} + T_G\right)}{T_{synch}} + \dfrac{T_P + T_G}{T_P + D + T_G}$ , subject to:

    - $T_G \geq \max\left(T_{Dpp} - T_P - D^{\max}, 0\right),$

    - $P\left(T_P + D_{SCS} + T_G\right) < T_{CS}^{\max},$

    - $P\left(T_P + D_{SCS} + T_G\right) + T_F^{\max} < T_{synch} < \dfrac{T_G}{rd_{max}} \cdot \dfrac{\log p\left(r_i\right)}{\log \varepsilon},$

- $D^{\min} \leq D \leq D^{\max}$ , and

- $D_{SCS}^{\min} \leq D_{SCS} \leq D_{SCS}^{\max}$ ;

○ in step iii) one may compute the SCS frame duration ($T_{SCS}$) and the DS frame slot duration (S) from the equations [$T_{SCS} = P(T_P + D_{SCS} + T_G)$] and [$S = (T_P + D + T_G)$], then one may compute the DS frame duration $T_F$ as integer multiple of S according to the equation

$$[T_F = S\left\lceil \frac{T_F^{\max}}{S} \right\rceil];$$

■ in step iii) one may also adjust the synchronization period ($T_{synch}$), determined in step ii), according to the equation $\left[ T_{synch}^{final} = T_{SCS} + T_F\left\lceil \frac{T_{synch} - T_{SCS}}{T_F} \right\rceil \right]$.

The invention also provides a device intended for computing chosen protocol parameters for a time slotted MAC protocol intended for a given application in a wireless network having a given hardware platform and a given topology adapted to transmission of frames consisting in a synchronization and control sub-frame, hereafter named SCS frame and at least partly generated by a synchronization algorithm, and a sequence of data sub-frames, hereafter named DS frames, and divided into multiple time slots.

This device comprises a computation means arranged for determining chosen protocol parameters by minimizing the overhead of the time slotted MAC protocol, subject to a set of chosen requirements of at least the given application, to chosen platform constraints, depending on chosen delays introduced by the hardware platform and impacting the time slotted MAC protocol, and to chosen SCS frame constraints, depending on chosen parameters of the synchronization algorithm.

Brief description of the figures

Other features and advantages of the invention will become apparent on examining the detailed specifications hereafter and the appended drawings, wherein:

- figure 1 schematically illustrates an example of frame structure of a time slotted MAC protocol, and
- figure 2 schematically and functionally illustrates a wireless network to which is connected a network equipment comprising an example of embodiment of a device according to the invention.

Detailed description of the preferred embodiment

The appended drawings may serve not only to complete the invention, but also to contribute to its definition, if need be.

The invention aims at offering a method, and an associated device (D), intended for computing chosen protocol parameters for a time slotted MAC protocol which is intended for being used for a given application into a wireless network (N).

The invention concerns any type of wireless network (N) capable of using a time slotted MAC protocol, and notably cellular (or mobile) radio networks (TDMA or GSM, for instance) and data communication networks (IEEE 802.15 (i.e. WPAN (Wireless Personal Area Network), such as Bluetooth or Zigbee)), IEEE 802.16 (i.e. WMAN (Wireless Metropolitan Area Network), such as WiMAX)), IEEE 802.11 (i.e. WLAN (Wireless Local Area Network)), or ECMA UWB (Ultra Wide Band), for instance).

Moreover, in the following description it will be considered that the wireless network (N) is of the multi-hop type. So it comprises wireless routers or access points connected therebetween and defining nodes. But the invention is not limited to this type of wireless network. Indeed it concerns also wireless network (N) of the single-hop type, i.e. comprising base stations (or any equivalent radio network equipments) serving user (or client) wireless communication equipments and defining nodes. It is recalled that a single-hop type wireless network is a particular case of a multi-hop type wireless network.

In both types (single-hop and multi-hop) of wireless network, all nodes are synchronized under a common time reference and transmissions occur periodically through a sequence of multi-slot frames. Each frame consists of a synchronization and control sub-frame (hereafter named SCS frame) followed by a sequence of data sub-frames (or DS frames). Both SCS frame (SF) and DS frames (DFi, i = 1 to K) span several slots.

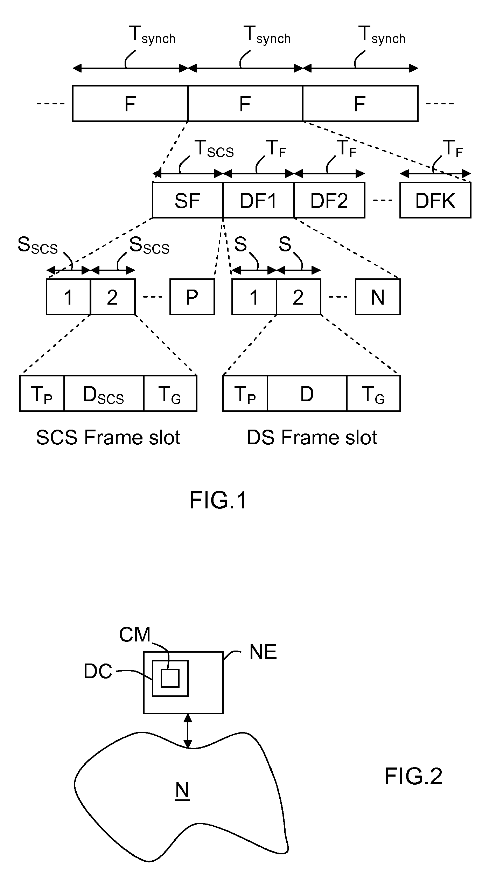

An example of frame structure F of a time slotted MAC protocol, common to both single-hop and multi-hop wireless networks, is illustrated in figure 1. This time slotted MAC protocol frame structure can be overlaid on top of either single-carrier networks (like cellular GSM, IEEE 802.11, or UWB) or multi-carrier OFDM networks (like IEEE 802.16).

For simplicity, in the following description it will be considered that the wireless network (N) is a single-carrier network in which optimizations occur in the time domain. But the invention also concerns multi-carrier wireless networks if one assumes an allocation of resources in the frequency domain that requires optimizations at the MAC protocol frame level in the time domain.

The SCS frame SF contains control and management functions such as (i) network synchronization, (ii) registration of incoming nodes in the wireless network (N), (iii) collection/exchange of network states, and (iv) schedule computation and dissemination based on collected/exchanged states. Functions (i)-(iv) can be performed in a centralized or distributed manner.

A DS frame DFi (i = 1 to K) contains all communication actions and data to be transmitted. During each DS frame slot, a set of nodes transmit in a conflict-free manner according to a schedule that has been computed either by a central entity or by the nodes themselves in a distributed manner during the associated SCS frame SF.

It is recalled that in single-hop wireless networks a DS frame is divided into a downlink portion (i.e. from base station to user radio communication equipment) and an uplink portion (i.e. from user radio communication equipment to base station), but in multi-hop wireless networks such a division of the DS frame may not be applicable and each node can use any slot of a DS frame either for transmission or reception.

The basic parameters of a time slotted MAC protocol are the DS frame slot duration S, the DS frame slot packet duration D, the slot guard time $T_G$, the SCS frame duration $T_{SCS}$, the SCS frame slot duration $D_{SCS}$ (=$T_{SCS}/P$), the synchronization period $T_{synch}$ and the DS frame duration $T_F$.

The DS frame slot duration S is the minimum time slotted MAC protocol communication time unit. During a DS frame slot a node must be able to successfully transmit (Tx) or receive (Rx) packets from its neighbors. The DS frame slot duration S should be minimized to enable provision of delay guarantees.

The DS frame slot packet duration D is the maximum MAC packet duration. It is determined by the minimum required data transmission rate and a range of required packet sizes. It should also enable full utilization of the useful part of each slot (DS frame slot duration S minus overhead) with one or more packet transmissions.

The slot guard time $T_G$ is an idle time appended at the end of each slot (of a DS frame DFi or a SCS frame SF) to enable correct protocol operation during Tx or Rx activity. It provides a time cushion for hardware-related communication delays and slot misalignments due to clock drifts. The slot guard time $T_G$ is a per-slot overhead, hence generally critical to minimize for efficient protocol operation.

The SCS frame duration $T_{SCS}$ corresponds to overhead of the time slotted MAC protocol due to the above mentioned management functions (i)-(iv) that also include the synchronization algorithm. This parameter should be minimized to avoid disruption of delay sensitive transmissions and also to minimize the SCS frame overhead. The SCS frame duration $T_{SCS}$ consists of P time slots each of duration $S_{SCS}$.

The synchronization period $T_{synch}$ defines the frequency of SCS frame repetition (or periodicity) that also includes execution of the synchronization algorithm. So it can be also considered as the duration of the frame F. This parameter $T_{synch}$ should be maximized to minimize the SCS frame overhead. It depends on losses and clock drifts.

It is important to note that the time slotted MAC protocol parameters depend on requirements (notably of the given application), the given hardware platform (of the wireless network (N)) and the synchronization algorithm, and also on each other. For instance, a very large slot guard time $T_G$ can effectively mask all hardware delays (or "bottlenecks") and clock drifts, but would also increase control overhead and slot overhead. It also presents challenges to the synchronization algorithm to maintain low synchronization overhead and meet the $T_{SCS}$ delay bounds. Moreover, increasing the DS frame slot duration S reduces protocol overhead but also reduces the protocol ability to provide delay guarantees.

As it is schematically illustrated in figure 2, a device DC, according to the invention, may be located into a network equipment NE, for instance a management equipment, which is connected to a wireless network N having a given hardware platform and a given topology. But this device DC could be also a network equipment connected to a wireless network N or it could be located into a computer (or any equivalent means) which is neither connected nor coupled to the wireless network N. It is important to note that a device DC may be arranged to dynamically compute and/or adapt protocol parameters online or to compute or adapt protocol parameters through offline computations.

So, a device DC (and notably its computation means (or module) CM) is preferably made of software modules, at least partly. But it could be also made of electronic circuit(s) or hardware modules, or a combination of hardware and software modules (in this case the device DC comprises also a software interface allowing interworking between the hardware and software modules).

As mentioned before, the invention proposes a method intended for computing chosen protocol parameters for a time slotted MAC protocol which is intended for being used for a given application into a wireless network N. This method can be implemented at least partly by at least one device DC according to the invention.

The method according to the invention consists in determining chosen protocol parameters of the time slotted MAC protocol to design or to optimize by minimizing its overhead introduced by the hardware platform (of the wireless network N) for packets traversing the layers of the protocol stack. This overhead minimization is subject to a set of chosen requirements of at least the given application, to chosen platform constraints, which depend on chosen delays introduced by the hardware platform and which impact the time slotted MAC protocol, and to chosen SCS frame constraints which depend on chosen parameters of the synchronization algorithm.

The protocol parameters, that are determined with the method according to the invention, are preferably chosen from a protocol parameter group which comprises all the above mentioned basic protocol parameters i.e. the DS frame slot duration S, the DS frame slot packet duration D, the slot guard time $T_G$, the DS frame duration $T_F$, the SCS frame duration $T_{SCS}$, the SCS frame slot duration $D_{SCS}$ and the synchronization period $T_{synch}$. In the following description it will be considered, as example, that the method according to the invention is adapted to determine everyone of the above mentioned basic protocol parameters (S, D, $T_G$, $T_F$, $T_{SCS}$, $D_{SCS}$ and $T_{synch}$).

As mentioned above, the overhead minimization is subject notably to chosen platform constraints depending on chosen delays (or bottlenecks) introduced by the hardware platform.

These chosen delays (or bottlenecks) can be chosen from a delay group which comprises at least a clock drift rate rd, a packet preparation overhead $T_{Dpp}$, a slot processing overhead $T_P$, a communication turnaround time between two successive frame receptions T_RxRx, a communication turnaround time between two successive frame transmissions T_TxTx, a communication turnaround time between a frame reception and a frame transmission T_RxTx, and a communication turnaround time between a frame transmission and a frame reception T_TxRx. Some of these chosen delays may be obtained by measurements, while some other may be given by specifications or requirements.

It is important to note that the platform delays (or bottlenecks) $T_{Dpp}$, $T_P$ T_RxRx, T_TxRx, T_RxTx and T_TxTx include hardware and low-level software processing delays that may not be directly visible and therefore cannot be controlled at the level where the protocol parameter determination is performed. So, these delays (or bottlenecks) can only be determined by measurements at the level where the protocol parameter determination is performed.

The clock drift rate rd is the speed that the clock of each node of the wireless network N deviates with respect to a reference clock. The reference clock can be provided either by in-band signaling from special mutually synchronized nodes within the wireless network N, or by out-of-band band signaling like GPS clocks. The drift rate of clocks based on typical crystal oscillators can range from 1 to 100 $\mu$s/s (microseconds per second).

The (data) packet preparation time $T_{Dpp}$ is the minimum time for consecutive packet arrivals at a MAC protocol queue. It is recalled that each hardware platform has a maximum rate at which incoming packets from higher layers can be prepared to enter the MAC protocol queue. This rate is typically controlled by lower level software processes, needs to be measured, and determines the packet preparation time $T_{Dpp}$.

The slot processing overhead $T_P$ is the duration from the start of a slot until the first bit is in the air. It is recalled that each slot involves processing the following actions before any reception (Rx) or transmission (Tx) activity can begin: (i) schedule the next slot time instant (typically through a timer), (ii) determine the current slot type (Rx or Tx), and (iii) in case of a Tx slot, prepare the hardware for transmission. Although hardware transmission preparation does not occur for Rx slots, the slot processing overhead $T_P$ must take this action into account since slot duration is independent of slot type.

The communication turnaround time T_RxRx is the delay between two successive frame receptions. Consecutive Rx slots requiring no change in hardware state, and no additional slot overhead being incurred by two or more consecutive Rx slots in addition to slot processing overhead $T_P$, it is possible to omit the communication turnaround time T_RxRx in the computations.

The communication turnaround time T_TxTx is the delay between two successive frame transmissions. This delay (or bottleneck) is the time from the last bit in the air for an outgoing packet until the first bit in the air of the next packet. This delay includes the delay from programming the hardware for transmission until the packet is transmitted in the air (i.e. part of the slot processing overhead $T_P$). It also depends on the platform's ability to continuously feed the MAC protocol queue with prepared packets. So, it depends on the packet preparation overhead $T_{Dpp}$.

The communication turnaround time T_RxTx is the delay between a frame reception and a frame transmission. This delay (or bottleneck) is the time from the reception of the last bit until the first bit of the outgoing frame is transmitted in the air. In addition to the delay for the hardware to change state from receive mode to transmit mode (turn on power amplifier, for instance), the communication turnaround time T_RxTx includes the same hardware transmission preparation delay as in the slot processing overhead $T_P$.

The hardware platform constraints are preferably chosen in order to ensure correct and efficient protocol operations for transmissions during both a SCS frame SF and a DS frame DFi. They may determine the slot guard time $T_G$, the DS frame slot packet duration D and the SCS frame slot duration $D_{SCS}$ as a function of the platform delays (or bottlenecks).

In the following description one makes three non-limiting assumptions for the turnaround overheads:

- changing state from reception to transmission (or vice versa) includes a small hardware-related delay to change the hardware state,
- the transmission slots include delay to prepare and program the hardware for transmission, and
- for transmission slots which are preceded by a reception slot the small hardware-related delay is added.

These three assumptions lead to the following relationships for the communication turnaround time overheads: T_RxRx < T_TxRx < T_RxTx. Furthermore, since a reception activity is assumed to finish within its slot the T_RxTx delay starts at latest at the slot boundary. This implies that T_RxTx < $T_P$.

One thus use the remaining delays (or bottlenecks) $T_P$, T_TxTx and $T_{Dpp}$ to derive the platform constraints. The slot processing overhead $T_P$ is unavailable at the start of each slot. So, this provides a platform constraint that relates the slot processing overhead $T_P$ to the DS frame slot duration S, the DS frame slot packet duration D and the slot guard time $T_G$:

$$S = T_P + D + T_G \qquad (1).$$

It is also possible to derive a platform constraint for the time slotted MAC protocol ability to transmit a stream of packets in consecutive transmission slots. Indeed, incoming packets from higher layers are queued in a packet preparation module that has a packet preparation overhead (or service time) $T_{Dpp}$. So, prepared packets enter the time slotted MAC protocol queue, and for consecutive transmission slots, the time slotted MAC protocol generates transmission requests every S seconds. This means that the first prepared packet in the MAC protocol queue (if any) starts to be transmitted after a delay which is equal to the slot processing overhead $T_P$. Therefore, given a stream of incoming packets to the packet processing queue, the service rate of the MAC protocol queue should be at least equal to the service rate of the packet processing queue:

$$S \geq T_{Dpp} \qquad (2),$$

which provides another platform constraint.

If the last platform constraint (2) is satisfied, the MAC protocol is always able to serve packets incoming to the packet preparation queue at each transmission slot. In this case, the MAC protocol queue will be full and each prepared packet will be transmitted after the slot processing overhead $T_P$, as expected. However, if the last platform constraint (2) is not satisfied, the time slotted MAC protocol cannot operate correctly for consecutive transmission slots. Its behavior depends on whether the implementation allows transmissions of prepared packets that arrive at the MAC protocol queue after the beginning of a slot or waits for the next transmission slot. In the first case, packets may exceed the slot boundaries resulting in an incorrect operation. In the second case, transmission slots are wasted which induces a performance degradation.

If the last platform constraint (2) is satisfied, consecutive prepared packet transmissions are separated by a packet preparation overhead $T_{Dpp}$ or more depending on the DS frame slot packet duration D. For D less than $T_{Dpp}$ -$T_P$, T_TxTx = $T_{Dpp}$ - D, otherwise T_TxTx = $T_P$. Since the communication turnaround time T_TxTx only depends on $T_{Dpp}$, D and $T_P$, it does not need to be measured or be explicitly taken into account in the platform constraints.

Using the platform constraints (1) and (2) one may define still another platform constraint for the slot guard time $T_G$:

$$S \geq T_{DPP}. T_G \geq max(T_{Dpp} - T_P - D, 0) \qquad (3).$$

In the last constraint (3) the max( ) operation covers the case D > $T_{Dpp}$ -$T_P$, where the hardware platform can continuously prepare packets for transmission within the duration of slot processing and packet duration. In this case, the slot guard time $T_G$ due to platform delays (or bottlenecks) can be set to zero. Otherwise, the slot guard time $T_G$

should be such that the $T_{Dpp}$ minimum packet separation is satisfied.

The constraints on the slot guard time $T_G$ due to the clock drift rate rd can be captured by the SCS frame constraints described below.

The SCS frame constraints are chosen to ensure correct and efficient operation of said synchronization algorithm during a SCS frame SF. So they depend on the synchronization algorithm. They may determine the synchronization period $T_{synch}$ and the SCS frame duration $T_{SCS}$ as a function of the slot guard time $T_G$, the clock drift rate rd and the synchronization failures due to packet losses.

The synchronization algorithm uses beacons to synchronize all node clocks to a common time reference clock, which can be provided by an external time reference, such as a GPS time, or certain nodes acting as gateways. The synchronization algorithm is executed during each SCS frame SF and its execution occurs every $T_{synch}$ slots. During each execution, some nodes may not receive a synchronization beacon and therefore need to wait until the next execution. One says that the wireless network N de-synchronizes if the clock drift between at least two nodes exceeds the slot guard time $T_G$. Let $rd_{max}$ be the maximum clock drift rate in the wireless network N. Then, after $T_G = rd_{max}$ the clock offset of nodes with maximum drift rate will exceed the slot guard time $T_G$ and the wireless network N will de-synchronize.

So, one may derive constraints for each protocol parameter that will ensure (i) that the synchronization algorithm will operate correctly, (ii) that the SCS frame overhead will be minimized, and (iii) that the wireless network N will not de-synchronize.

As mentioned above, the SCS frame duration $T_{SCS}$ is determined by P, the duration $D_{SCS}$ of each SCS frame slot, the slot time guard $T_G$ and the slot processing overhead $T_P$, and more precisely by the following SCS constraint:

$$T_{SCS} = P(T_P + D_{SCS} + T_G) \qquad (4)$$

For certain applications, such as real-time applications (like video or voice), the SCS frame duration $T_{SCS}$ should not exceed a delay bound $T_{SCS}^{\max}$ (i.e. a SCS frame delay requirement). Also, since synchronization beacons are transmitted during the SCS frame SF, the node clock offsets should not exceed the slot time guard $T_G$ during the synchronization algorithm execution. Therefore, the SCS frame duration $T_{SCS}$ should be less than $T_G / rd_{max}$ for correct synchronization algorithm operation. However, the SCS frame duration $T_{SCS}$ is by definition smaller than the synchronization period $T_{synch}$, which should also be smaller than $T_G / rd_{max}$. Therefore, a constraint for the SCS frame duration $T_{SCS}$ can be the delay bound $T_{SCS}^{\max}$ constraint:

$$T_{SCS} < T_{SCS}^{\max} \qquad (5).$$

As the synchronization period $T_{synch}$ should be greater than the SCS frame duration $T_{SCS}$ plus the duration of at least one DS frame DFi, one may derive another SCS constraint:

$$T_{synch} > T_{SCS} + T_F^{\max} \qquad (6),$$

where $T_F^{\max}$ is an upper bound on delay of the DS frame DFi (i.e. a DS frame delay requirement).

To avoid network de-synchronization the synchronization period $T_{synch}$ should be less than $T_G / rd_{max}$. So, to minimize the SCS frame overhead, the synchronization period $T_{synch}$ should be maximized. However, executing the synchronization algorithm every $T_G / rd_{max}$ would only apply to a lossless wireless network. In the practical case where losses exist, not all nodes will receive a beacon in a single synchronization algorithm execution. So, to capture the effect of losses, one may assume that each synchronization algorithm execution has a constant failure probability p that is independent of the previous executions. The execution fails if at least one node does not receive a beacon. Under this assumption, the probability of network de-synchronization $P_{desynch}$ can be defined as follows:

$$P_{desynch} = P^{\left\lceil \frac{T_G / rd_{max}}{T_{synch}} \right\rceil} \qquad (7).$$

Now, if one gives a synchronization algorithm reliability upper bound ε (i.e. a requirement) on $P_{desynch}$ (7), then one can define an upper bound for the synchronization period $T_{synch}$ that takes losses into account:

$$T_{synch} < \frac{T_G}{rd_{max}} \frac{\log p}{\log \varepsilon} \qquad (8).$$

Then, if one combines relations (6) and (8), one may define a SCS constraint for the synchronization period $T_{synch}$:

$$T_{SCS} + T_F^{max} < T_{synch} < \frac{T_G}{rd_{max}} \frac{\log p}{\log \varepsilon} \qquad (9).$$

The ratio $\dfrac{\log p}{\log \varepsilon}$ can be seen as a loss-induced penalty because it restricts the synchronization period $T_{synch}$ to be smaller than the lossless bound $T_G = rd_{max}$.

One will now describe an example of embodiment of a method according to the invention allowing to determine optimized time slotted MAC protocol parameters given a (programmable) hardware platform, a wireless network topology and a set of requirements and constraints.

One first assumes that the hardware platform may support R data rates represented by a discrete set $\{r_i\}$, where i = 1, ..., R. These data rates correspond to modulation levels supported by the hardware platform.

Then one further assumes that the set of requirements comprises the SCS frame delay requirement $T_{SCS}^{max}$ (defined above), the DS frame delay requirement $T_F^{max}$ (defined above), the synchronization algorithm reliability ε (defined above), minimum $D^{min}$ and maximum $D^{max}$ requirements for a DS frame slot packet duration D, and minimum $D_{SCS}^{min}$ and maximum $D_{SCS}^{max}$ requirements for a SCS frame slot duration $D_{SCS}$.

The minimum $D^{min}$ and maximum $D^{max}$ requirements for the DS frame slot packet duration D, and the minimum $D_{SCS}^{min}$ and maximum $D_{SCS}^{max}$ requirements for a SCS frame slot duration $D_{SCS}$ can be provided by the application. For instance, $D^{max}$ can be determined from the minimum data rate to be used in a DS frame DFi and the maximum desired packet size (in bytes) to be used at each DS frame time slot, and $D_{SCS}^{min}$ can be determined from the maximum data rate to be used in a SCS frame SF and the minimum control packet size (in bits) to be used at each SCS frame time slot.

A SCS frame SF being characterized by a duration of P time slots, the synchronization algorithm operation during this SCS frame SF is characterized by execution time of at most P slots and a separate synchronization algorithm failure probability $p(r_i)$ for each data rate $r_i$. The probabilities $p(r_i)$ can be measured in the wireless network topology where the given application is run.

Under the previous assumptions and definitions, the example of embodiment of the method may comprise the three steps described hereafter.

A first step (i) may consist in performing measurements on the hardware platform in order to determine some chosen delays. For instance, one may performed measurements to determine the maximal clock drift rate $rd_{max}$, the packet preparation overhead $T_{Dpp}$ and the slot processing overhead $T_P$.

A second step (ii) may consist in determining some chosen protocol parameters that minimize the time slotted MAC protocol overhead, subject to the set of chosen requirements, the chosen platform constraints and the chosen SCS frame constraints. For instance, one may determine the DS frame slot packet duration D, the slot guard time $T_G$, the SCS frame slot duration $D_{SCS}$ and the synchronization period $T_{synch}$. Such a determination can be done by solving an optimization problem having an objective function consisting of the protocol overhead, i.e. the SCS frame overhead

$$\frac{P(T_P + D_{SCS} + T_G)}{T_{synch}}$$ added to the DS frame slot overhead $$\frac{T_P + T_G}{T_P + D + T_G}$$ .

So, one has to minimize the objective function $( \frac{P(T_P + D_{SCS} + T_G)}{T_{synch}} + \frac{T_P + T_G}{T_P + D + T_G} )$, subject to the following requirements and constraints (defined above):

- $T_G \geq \max(T_{Dpp} - T_P - D^{\max}, 0),$

- $P(T_P + D_{SCS} + T_G) < T_{CS}^{\max},$

- $P(T_P + D_{SCS} + T_G) + T_F^{\max} < T_{synch} < \frac{T_G}{rd_{\max}} \cdot \frac{\log p(r_i)}{\log \varepsilon},$

- $D^{\min} \leq D \leq D^{\max}$ , and

- $D_{SCS}^{\min} \leq D_{SCS} \leq D_{SCS}^{\max}$ .

A third step (iii) may consist in computing the remaining chosen protocol parameters (not yet determined) from the chosen protocol parameters (here $T_G$, $T_{synch}$, D and $D_{SCS}$) determined in the second step (ii). For instance, one may determine the DS frame slot duration S, the SCS frame duration $T_{SCS}$ and the DS frame duration $T_F$.
For instance, one may compute the SCS frame duration $T_{SCS}$ from constraint (4) (i.e. $T_{SCS} = P(T_P + D_{SCS} + T_G)$), and the DS frame slot duration S from constraint (1) (i.e. $S = (T_P + D + T_G)$). Then one may compute the DS frame duration $T_F$ as integer multiple of S according to the equation $T_F = S \left\lceil \frac{T_F^{\max}}{S} \right\rceil$ , for instance.

It is further possible to adjust finally the synchronization period $T_{synch}$, determined in the second step (ii), according to the equation $T_{synch}^{final} = T_{SCS} + T_F \left\lceil \frac{T_{synch} - T_{SCS}}{T_F} \right\rceil$ , , for instance.

Some examples of procedures allowing to measure some platform delays (or bottlenecks), and more precisely $rd_{\max}$, $T_P$ and $T_{Dpp}$, and the packet losses $p(r_i)$ are described hereafter.
These procedures do not require any additional hardware. They only require a set of boards of the hardware platform where the MAC protocol to be optimized (or designed) is performed, and packet transmissions between board pairs.
The maximum clock drift rate $rd_{\max}$ can be determined by measuring the clock drift rates rd between all board pairs. The clock drift rate rd for each pair A or B can be measured by periodically sending time-stamped packets from pair A to pair B. For each received packet, pair B computes and stores its local clock and an offset which is equal to the difference between its local clock and the timestamp in the received packet. Then the clock drift rate rd of pair B with respect to pair A can be computed offline as the slope of the offset evolution over time. This procedure can be performed at different locations and different times for each pair A or B.
The slot processing overhead $T_P$ can be measured on each board as the difference between an interrupt signaling the start of a slot and an interrupt signaling the start of a packet transmission by the MAC processor of the considered board.
The (data) packet preparation time $T_{Dpp}$ can be measured through back-to-back transmissions of minimal-duration data packets time-stamped at a sender board A and stored by a receiver board B. The time difference between consecutive timestamps will include the slot processing overhead $T_P$ plus the packet duration D at board A. Minimal packet duration D will expose the data packet preparation time $T_{Dpp}$ (the system operates under $T_{Dpp} > T_P + D$). Extensive measurements could be performed at each board and across boards to get a sufficient number of measurements for an accurate estimation of the (data) packet preparation time $T_{Dpp}$.

The synchronization algorithm failure probability $p(r_i)$ can be measured by imposing all network nodes to operate under a chosen data rate $r_i$, and then by executing the synchronization algorithm several times in the corresponding network environment. The number of executions should be high in order to ensure sufficient statistics on the derived sample quantities. After these executions the synchronization algorithm failure probability $p(r_i)$ is estimated as the fraction of times where at least one node did not receive a synchronization beacon.

The invention is not limited to the embodiments of method, device and network equipment described above, only as examples, but it encompasses all alternative embodiments which may be considered by one skilled in the art within the scope of the claims hereafter.

**Claims**

1. Method for computing chosen protocol parameters for a time slotted MAC protocol intended for a given application in a wireless network (N) having a given hardware platform and a given topology adapted to transmission of frames consisting in a synchronization and control sub-frame, hereafter named SCS frame and at least partly generated by a synchronization algorithm, and a sequence of data sub-frames, hereafter named DS frames, and divided into multiple time slots, **characterized in that** it consists in determining chosen protocol parameters by minimizing the overhead of said time slotted MAC protocol, subject to a set of chosen requirements of at least said given application, to chosen platform constraints, depending on chosen delays introduced by said hardware platform and impacting said time slotted MAC protocol, and to chosen SCS frame constraints, depending on chosen parameters of said synchronization algorithm.

2. Method according to claim 1, **characterized in that** said protocol parameters are chosen from a protocol parameter group comprising at least a DS frame slot duration (S), a DS frame slot packet duration (D), a slot guard time ($T_G$), a DS frame duration ($T_F$), a SCS frame duration ($T_{SCS}$), a SCS frame slot duration ($D_{SCS}$), and a synchronization period ($T_{synch}$).

3. Method according to one of claims 1 and 2, **characterized in that** said requirements are chosen from a requirement group comprising at least a SCS frame delay requirement $\left( T_{SCS}^{\max} \right)$, a DS frame delay requirement $\left( T_F^{\max} \right)$, a synchronization algorithm reliability ($\varepsilon$), minimum and maximum requirements for a DS frame slot packet duration (D), and minimum and maximum requirements for a SCS frame slot duration ($D_{SCS}$).

4. Method according to one of claims 1 to 3, **characterized in that** said hardware platform delays impacting said time slotted MAC protocol are chosen from a delay group comprising at least a clock drift rate (rd), a packet preparation overhead ($T_{Dpp}$), a slot processing overhead ($T_P$), a communication turnaround time between two successive frame receptions (T_RxRx), a communication turnaround time between two successive frame transmissions (T_TxTx), a communication turnaround time between a frame reception and a frame transmission (T_RxTx), and a communication turnaround time between a frame transmission and a frame reception (T_TxRx).

5. Method according to one of claims 1 to 4, **characterized in that** said hardware platform constraints are chosen to ensure correct and efficient protocol operations for transmissions during both a SCS frame and a DS frame.

6. Method according to one of claims 1 to 5, **characterized in that** said SCS frame constraints are chosen to ensure correct and efficient operation of said synchronization algorithm during a SCS frame.

7. Method according to claim 6, **characterized in that** said SCS frame constraints are chosen to determine a synchronization period ($T_{synch}$) and a SCS frame duration ($T_{SCS}$) as a function of a slot guard time ($T_G$), a clock drift rate (rd) and synchronization failures due to packet losses.

8. Method according to one of claims 1 to 7, **characterized in that** it comprises the steps of:

    i) performing measurements on said hardware platform to determine at least some of said chosen delays ($T_P$,

$T_{Dpp}$, $rd_{max}$),

ii) determining some of said chosen protocol parameters ($T_G$, $T_{synch}$, D, $D_{SCS}$) that minimize said time slotted MAC protocol overhead, subject to said set of chosen requirements, said chosen platform constraints and said chosen SCS frame constraints, and

iii) computing the remaining chosen protocol parameters ($T_{SCS}$, S, $T_F$) from said chosen protocol parameters ($T_G$, $T_{synch}$, D, $D_{SCS}$) determined in step ii).

9. Method according to claim 8, **characterized in that** in step i) one determines a maximal clock drift rate ($rd_{max}$), a packet preparation overhead ($T_{Dpp}$) and a slot processing overhead ($T_P$) through measurements.

10. Method according to one of claims 8 and 9, **characterized in that** in step ii) one determines a DS frame slot packet duration (D), a slot guard time ($T_G$), a SCS frame slot duration ($D_{SCS}$) and a synchronization period ($T_{synch}$).

11. Method according to the combination of claims 9 and 10,

   **characterized in that** in step ii) one minimizes $\dfrac{P\left(T_P + D_{SCS} + T_G\right)}{T_{synch}} + \dfrac{T_P + T_G}{T_P + D + T_G}$ , subject to:

   - $T_G \geq \max\left(T_{Dpp} - T_P - D^{\max}, 0\right)$,

   - $P\left(T_P + D_{SCS} + T_G\right) < T_{CS}^{\max}$ ,

   - $P\left(T_P + D_{SCS} + T_G\right) + T_F^{\max} < T_{synch} < \dfrac{T_G}{rd_{max}} \cdot \dfrac{\log p\left(r_i\right)}{\log \varepsilon}$ ,

   - $D^{\min} \leq D \leq D^{\max}$ , and

   - $D_{SCS}^{\min} \leq D_{SCS} \leq D_{SCS}^{\max}$ .

12. Method according to claim 11, **characterized in that** in step iii) one computes the SCS frame duration ($T_{SCS}$) and the DS frame slot duration (S) from the equations [$T_{SCS} = P(T_P + D_{SCS} + T_G)$] and [$S = (T_P + D + T_G)$], then one computes the DS frame duration ($T_F$) as integer multiple of S according to the equation $\left[T_F = S\left\lceil \dfrac{T_F^{\max}}{S} \right\rceil\right]$.

13. Method according to claim 12, **characterized in that** in step iii) one also adjusts said synchronization period ($T_{synch}$), determined in step ii), according to the equation $\left[T_{synch}^{final} = T_{SCS} + T_F\left\lceil \dfrac{T_{synch} - T_{SCS}}{T_F} \right\rceil\right]$.

14. Device (DC) for computing chosen protocol parameters for a time slotted MAC protocol intended for a given application in a wireless network (N) having a given hardware platform and a given topology adapted to transmission of frames consisting in a synchronization and control sub-frame, hereafter named SCS frame and at least partly generated by a synchronization algorithm, and a sequence of data sub-frames, hereafter named DS frames, and divided into multiple time slots, **characterized in that** it comprises a computation means (CM) arranged for determining chosen protocol parameters by minimizing the overhead of said time slotted MAC protocol, subject to a set of chosen requirements of at least said given application, to chosen platform constraints, depending on chosen delays introduced by said hardware platform and impacting said time slotted MAC protocol, and to chosen SCS frame constraints, depending on chosen parameters of said synchronization algorithm.

$$T_{synch} \qquad T_{synch} \qquad T_{synch}$$

| F | F | F |
|---|---|---|

$$T_{SCS} \quad T_F \quad T_F \qquad T_F$$

| SF | DF1 | DF2 | --- | DFK |
|----|-----|-----|-----|-----|

$$S_{SCS} \qquad S_{SCS} \qquad\qquad S \quad S$$

| 1 | 2 | --- | P | | 1 | 2 | --- | N |

| $T_P$ | $D_{SCS}$ | $T_G$ |
|-------|-----------|-------|

SCS Frame slot

| $T_P$ | D | $T_G$ |
|-------|---|-------|

DS Frame slot

FIG.1

CM
DC
NE

N

FIG.2

Europäisches
Patentamt

European
Patent Office

Office européen
des brevets

# EUROPEAN SEARCH REPORT

Application Number

EP 09 30 5125

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WEI YE ET AL: "An energy-efficient MAC protocol for wireless sensor networks" PROCEEDINGS IEEE INFOCOM 2002. THE CONFERENCE ON COMPUTER COMMUNICATIONS. 21ST. ANNUAL JOINT CONFERENCE OF THE IEEE COMPUTER AND COMMUNICATIONS SOCIETIES. NEW YORK, NY, JUNE 23 - 27, 2002; [PROCEEDINGS IEEE INFOCOM. THE CONFERENCE ON COMPUTER COMMUNI, vol. 3, 23 June 2002 (2002-06-23), pages 1567-1576, XP010593724 ISBN: 978-0-7803-7476-8 * page 1568, column 1, lines 1-17 * * figure 3 * * page 1570, paragraph B.2 * * page 1570, paragraph B.3 * * page 1572, paragraphs D,E * ----- | 1,14 | INV. H04W28/06 |
| A | B.YAHYA, J.BEN-OTHMAN: "Towards a classification of energy aware MAC protocols for wireless sensor networks" WIRELESS COMMUNICATIONS AND MOBILE COMPUTING, [Online] 4 February 2009 (2009-02-04), XP002534588 Retrieved from the Internet: URL:http://www3.interscience.wiley.com/cgi-bin/fulltext/121680504/PDFSTART> [retrieved on 2009-02-04] * the whole document * ----- | 1-14 | TECHNICAL FIELDS SEARCHED (IPC) H04W |
| A | US 6 493 334 B1 (KRZYMIEN WITOLD A [CA] ET AL) 10 December 2002 (2002-12-10) * the whole document * ----- -/-- | | |

The present search report has been drawn up for all claims

| Place of search | Date of completion of the search | Examiner |
|---|---|---|
| Munich | 30 June 2009 | Bohnhoff, Peter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EUROPEAN SEARCH REPORT**

Application Number

EP 09 30 5125

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GANERIWAL S ET AL: "Timing-sync Protocol for sensor networks" SENSYS'03. PROCEEDINGS OF THE 1ST. INTERNATIONAL CONFERENCE ON EMBEDDED NETWORKED SENSOR SYSTEMS. LOS ANGELES, CA, NOV. 5 - 7, 2003; [PROCEEDINGS OF THE INTERNATIONAL CONFERENCE ON EMBEDDED NETWORKED SENSOR SYSTEMS], NEW YORK, NY : ACM, US, vol. CONF. 1, 3 November 2003 (2003-11-03), pages 1-12, XP002459888 ISBN: 978-1-58113-707-1 * the whole document * ----- | 1-14 | |
| A | ELSON J ET AL: "Reference Broadcast synchronization (RBS): Fine grained network time synchronization using reference broadcast" 4TH SYMPOSIUM ON OPERATING SYSTEMS DESIGN AND IMPLEMENTATION. OCT. 23-25, 2000, SAN DIEGO, CA, USENIX ASSOCIATION, US, 1 December 2002 (2002-12-01), pages 1-17, XP002459887 * the whole document * ----- | 1-14 | TECHNICAL FIELDS SEARCHED (IPC) |
| A | MINGXIA XU ET AL: "Lightweight and energy efficient time synchronization for sensor network" WIRELESS COMMUNICATIONS, NETWORKING AND MOBILE COMPUTING, 2005. PROCEE DINGS. 2005 INTERNATIONAL CONFERENCE ON WUHAN, CHINA SEPT. 23-26, 2005, PISCATAWAY, NJ, USA,IEEE, vol. 2, 23 September 2005 (2005-09-23), pages 947-950, XP010856304 ISBN: 978-0-7803-9335-6 * the whole document * ----- -/-- | 1-14 | |

The present search report has been drawn up for all claims

| Place of search | Date of completion of the search | Examiner |
|---|---|---|
| Munich | 30 June 2009 | Bohnhoff, Peter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**
Europäisches Patentamt
European Patent Office
Office européen des brevets

# EUROPEAN SEARCH REPORT

Application Number

EP 09 30 5125

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 0 647 045 A (MOTOROLA INC [US]) 5 April 1995 (1995-04-05) * the whole document * ----- | 1-14 | |
| | | | **TECHNICAL FIELDS SEARCHED (IPC)** |

The present search report has been drawn up for all claims

| Place of search | Date of completion of the search | Examiner |
|---|---|---|
| Munich | 30 June 2009 | Bohnhoff, Peter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 09 30 5125

This annex lists the patent family members relating to the patent documents cited in the above-mentioned European search report.
The members are as contained in the European Patent Office EDP file on
The European Patent Office is in no way liable for these particulars which are merely given for the purpose of information.

30-06-2009

| Patent document cited in search report | | Publication date | Patent family member(s) | | Publication date |
|---|---|---|---|---|---|
| US 6493334 | B1 | 10-12-2002 | CA | 2272875 A1 | 26-11-2000 |
| EP 0647045 | A | 05-04-1995 | US | 5555266 A | 10-09-1996 |

EPO FORM P0459

For more details about this annex : see Official Journal of the European Patent Office, No. 12/82